# EUROPEAN PATENT SPECIFICATION

(11) **EP 4 111 306 B1**
(45) Date of publication and mention of the grant of the patent: **27.11.2024**
(21) Application number: 20938146.6
(22) Date of filing: 26.05.2020
(51) Int. Cl.: G06F 12/0886, G06F 12/0879, G06T 1/60, G06F 12/0875, G06F 9/455, G06F 12/0895

(54) **DEVICE AND METHOD FOR DATA PACKING IN MEMORY**
VORRICHTUNG UND VERFAHREN ZUR DATENPACKUNG IN EINEM SPEICHER
DISPOSITIF ET PROCÉDÉ DE MISE EN PAQUETS DE DONNÉES DANS UNE MÉMOIRE

(43) Date of publication of application: 04.01.2023
(73) Proprietor: Huawei Technologies Co., Ltd., Shenzhen, Guangdong 518129, (CN)
(72) Inventor: PRASAD, Vatsalya, Milton, CB4 0FY (GB); ZHU, Yunpeng, Shenzhen, Guangdong 518129 (CN)
(74) Representative: Körber, Martin Hans
(86) International application number: PCT/CN2020/092265
(87) International publication number: WO 2021/237441

(56) References cited:
- US-A1- 2009 128 575
- US-A1- 2015 097 851
- US-A1- 2015 242 227
- US-A1- 2015 379 684
- US-A1- 2016 283 391
- US-A1- 2017 256 025
- US-B2- 7 403 952
- US-B2- 9 553 778

## Description

### FIELD OF THE INVENTION

This invention relates to encoding schemes for data in a memory.

### BACKGROUND

An Application Programming Interface or API is a piece of software which sits between other pieces of software. The API's purpose is to act as a translator and organizer for the commands sent from one of those two pieces of software to the other. For example, an API may be used between an application program and drivers of the hardware of a device or system on which the application is running. The API ensures that commands from the application are correctly interpreted by the drivers such that the commands can be carried out by the hardware of the device. These APIs allow for programmers to design and code applications, for example, games, animations, user interfaces, etc. without necessarily having to use exactly the right syntax for the operating system of the device. The API also allows the coders to write the program without having to code the application differently for every possible hardware combination on which the application may be run. Graphics and compute APIs in particular allow for the correct displaying of videos, virtual or augmented reality, and games at the display of a device such that the user sees the designer's intended image.

In gaming, APIs allow for the same game to run on multiple operating systems and also play a large part in optimising the system. A good graphics API can dramatically improve the rendering of complex visuals during gameplay by minimising the central processing unit (CPU) overhead required to process the graphics information and output the final image. This is achieved in most part by efficiently translating the information supplied by the application for rendering the intended image, and thus reducing the effort needed from the CPU to represent this information on a display to the user. This increased efficiency also reduces the latency of the system, allowing for the game to run more smoothly and improving the user experience during gameplay. A good graphics and compute API is important to a consumer of the content as well as a developer and retailer.

In turn, good APIs often lead to better content. The ability for the same hardware, with the same or a slightly better operating system, to smoothly generate even more complicated graphics without overloading the CPU then enables a developer to code even more complex and realistic graphics in their new game. Thus, more realistic and engaging content can be created, driving the same loop of improvement forward again.

In computing devices, the graphics processing unit (GPU) is responsible for generating the output to be displayed at the display of the device. GPUs are specialised for efficient manipulation of computer graphics and image processing, largely due to their ability to process large blocks of data using their parallel processing structure.

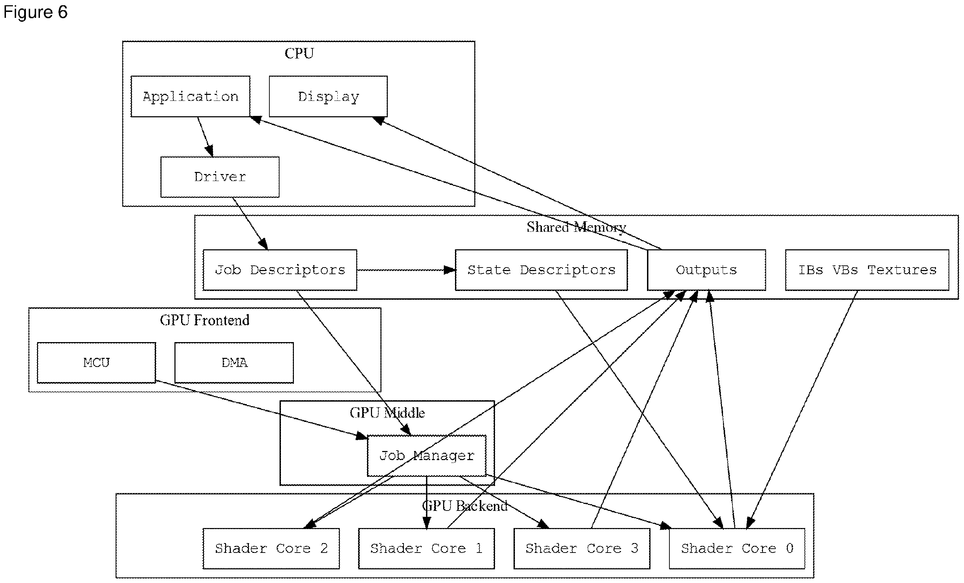

An example of a typical data flow from an application to a driver to a graphics processor unit is schematically shown in Figure 6.

GPUs use general purpose registers (GPRs) to store an index for the data stored in memory and these GPRs are located inside the GPU. Different units in the GPU are responsible for calling different resources from memory caches and executing them during the rendering of the graphics. For example, the texture unit (TU) is one hardware module inside the GPU, and it is responsible for calling the required resources from one or more memories for rendering the textures needed for a scene intended to be displayed. Shader resources are resources used by a shader present in a pipeline during pipeline execution. The shader code in the pipeline may code for multiple shaders, each corresponding to a shader resource stored in memory. Therefore, the shader code can be thought of as an algorithm comprising lots of shader resources, which when executed obtain a particular outcome. For example, executing the shader code may cause multiple shader resources to be used to apply a particular aesthetic to a 3D graphical representation of a space. Each shader resource or resource may require code from a different location in the memory to be retrieved in order to run. The shader code may therefore be broken down into a series of memory locations at which are stored individual resource algorithms. Each of these parts or individual resources may be separately described with regard to their function (i.e. their type), and their respective location in memory. The description of each resource then becomes what is called a resource descriptor. Some individual descriptors may be used by more than one shader when the same resource is required. Thus, the required resources can be called by the GPU by creating and storing descriptors for those resources.

The descriptors may be called hardware descriptors. The hardware descriptor may be referred to as such because they form data structures used by the hardware modules of the GPU. To assist the different modules of the GPU in accessing the resources of the shader code from the memory in which they are stored, various types of packing schemes can be used to organise the resource descriptors in a respective cache memory. A packing scheme may comprise a series of rules for storing the resource descriptors in the cache. Once the resource descriptors are stored according to the scheme, an index may be created to identify the location of each resource descriptor using a respective address within the cache memory. Descriptors are fundamentally pieces of meta data stored in a memory and used to describe a resource. There are multiple types of descriptors. For example, T descriptors may comprise the address and texture dimension for a texture. S descriptors may comprise the address and filtering mode for a sampler. Descriptors may also have different sizes. For example, a T descriptor may be larger than an S descriptor, or vice versa.

The packing scheme used may be specific to an API. An example of a graphics and computing API is Vulkan^{®}. Vulkan^{®} is specifically directed towards implementing a low-overhead high-performance cross-platform API for use with 3D graphics applications.

Vulkan^{®} defines different descriptor types for a single resource. Each hardware descriptor or sharp typically maps to one descriptor type. For example, an SSHARP descriptor may map to a Sampler resource type, a TSHARP descriptor may map to a Texture resource type, and so on. Some descriptor types may only be used by one descriptor.

As with many software products, API software such as Vulkan is periodically updated. Updating enables the APIs to include new features to better achieve certain objectives, e.g. improved run time. Two recently added features of the Vulkan API are:
The Combined Resources Buffer, or VK_EXT_combined_resources_buffer as denoted within the API software, is an opaque object that contains storage for a group of resources which can be collectively assigned. For example, they may be assigned as a single resource to graphics or compute shader using one binding index. The combined resources buffer is therefore an object which can contain multiple resources of various sizes and types such as buffers, images, samplers, and inline content data, etc.

The dynamic indexing, or VK_EXT_descriptor_indexing as demoted within the API software, provides fully dynamic indexing of different descriptor types. The dynamic indexing can support both nonuniform and uniform indexing of each access type, and the descriptors can be updated after binding. Multiple shader resource variables can share the same descriptor set and binding number. This allows for the updating of a descriptor set while it is in use by the GPU. The dynamic indexing also supports the use of unsized arrays of resources (i.e. Variable Count and Runtime array).

In the wake of the addition of new features such as those above, it may be necessary for those responsible for the software between which the API is sandwiched, to adapt that software so that the new features of the API can be supported for use. For example, adaptations may be needed for plugging into these new features on specifically designed mobile device based GPU hardware.

There may be many ways to allow for the software making use of an API to plug into and exploit the new features. A previous example of utilizing the above described new features of Vulkan API includes sorting the descriptors according to the descriptor types within their sets, and then putting descriptors of the same type into one continuous array. This makes the descriptors easier for the hardware to access and allows for the pre-fetching of all descriptors in GPU on-chip memory. However, it's infeasible to adapt this method to index the thousands of descriptors in the subsequently created heterogeneous descriptor arrays. Thus, in this previous example the dynamic indexing feature cannot be utilised to select only a portion of the descriptors in the array.

Therefore, there is a need for an efficient way to support both of the above described new Graphics Vulkan^{®} API features on Mobile GPU Hardware. One way this may be tackled is through an implemented packing scheme. Thus, it is desirable to develop a resource packing scheme which when implemented allows for new features of Vulkan^{®} API to be plugged into, subsequently increasing the efficiency of existing and future graphics based applications for mobile devices.

US 2017/256025 A1 discloses a texture cache architecture includes a first texture cache to store compressed texel data and a second texture cache to store decompressed texel data. US 2015/097851 A1 discloses a texture processing pipeline is configured to store decoded texture data within a cache unit in order to expedite the processing of texture requests. US 2015/379684 A1 discloses a graphics system supports variable rate compression and decompression of texture data and color data. US 2009/128575 A1 discloses methods for managing texture data. US 2016/283391 A1 discloses using compaction, as contrasted with compression, to reduce the footprint of a near memory. US 2015/242227 A1 discloses a method for providing dynamic information virtualization. US 7 403 952 B2 discloses a method and computer system for efficiently accessing resources in a multiprocessor computer system.

### SUMMARY OF THE INVENTION

According to one aspect there is provided a data processor configured to arrange data and a set of data resource descriptors in a cache memory, wherein the set of data resource descriptors comprises data resource descriptors of different types and different sizes, wherein the cache memory is linewise accessible by a data processing device, the data processor being configured to: determine a combined resource descriptor size and a cache line size such that one of those sizes is an integer multiple of the other one of those sizes; receive the data resource descriptors; define a plurality of non-overlapping storage areas in the cache memory, each storage area being aligned to either (i) a line of the cache or (ii) a location offset from a line of the cache by an integer multiple of the determined combined resource descriptor size; form a series of groups of data resource descriptors, each group being of a size less than or equal to the combined resource descriptor size; and store each group of data resource descriptors in a respective one of the defined storage areas.

Each resource descriptor may have a category based on which of a plurality of hardware units is used to fetch the resource descriptor from the cache memory, and prior to the step of forming a series of groups, the combined resource descriptors may be reordered such that all resource descriptors within each group are of the same category.

The combined resource descriptor size may be the maximum combined size of the resource descriptors needed to describe a single action.

The combined resource descriptor size may be an integer multiple of the cache line size.

The cache line size may be an integer multiple of the combined resource descriptor size.

The data resource descriptors may describe any combination of heterogeneous resource types comprising any of a texture, a sampler, a buffer, or an image.

The data processor may be a graphics processor unit.

According to a second aspect there is provided a method of arranging data and a set of data resource descriptors in a cache memory, wherein the set of data resource descriptors comprises data resource descriptors of different types and different sizes, wherein the cache memory is linewise accessible by a data processing device, the method comprising: determining a combined resource descriptor size and a cache line size such that one of those sizes is an integer multiple of the other of those sizes; receiving the data resource descriptors; defining a plurality of non-overlapping storage areas in the cache memory, each storage area being aligned to either (i) a line of the cache or (ii) a location offset from a line of the cache by an integer multiple of the determined combined resource descriptor size; forming a series of groups of data resource descriptors, each group being of a size less than or equal to the combined resource descriptor size; and storing each group of data resource descriptors in a respective one of the defined storage areas.

Prior to the step of forming a series of groups, the data resource descriptors may be reordered such that the resource descriptors within each group are of the same category.

A data flow of the method may be from a driver to a compiler to a graphics processor unit.

The driver may be configured to compute the size of each of the said storage areas and for each of a set of functions, each function being associated with a set of one or more of said groups of resource descriptors, store the resource descriptors of each group of that set in a single storage area.

The compiler may be configured to add to instructions for indexing the set of resource descriptors relating to a function such that an offset value is added which corresponds to an offset location in a respective storage area of the set of resource descriptors and to store those instructions in the same storage area as the resource descriptors for that function.

According to a third aspect there is provided a device comprising the data processor of any of claims 1 to 7 executing the method of any of claims 8 to 11, and a CPU executing the method of any of claims 12 to 14.

### BRIEF DESCRIPTION OF THE FIGURES

The present invention will now be described by way of example with reference to the accompanying drawings. In the drawings:
Figure 1 shows an example of resource descriptors packed in a memory according to an existing packing scheme.
Figure 2a shows three resources as three different combinations of descriptors, or combined resource descriptors.
Figure 2b shows example descriptor types and their respective category.
Figure 3a shows a cache comprising of four cache lines with two descriptors from different resources stored in the first cache line.
Figure 3b shows a cache comprising of four cache lines. The cache contains five descriptors for a first resource stored in the first and second cache lines, and two descriptors for a second resource stored in a third cache line.
Figure 3c shows a cache comprising of four cache lines. The cache contains five descriptors for a first resource stored in the first and second cache lines. The five descriptors are separated based on their categories into two groups, the groups to be stored in separate cache lines.
Figure 4a shows four different descriptor types and their respective sizes and categories.
Figure 4b shows a cache comprising eight cache lines. The various rules of the proposed packing scheme are used to arrange the combined descriptors of the one or more resources into the cache lines.
Figure 5 shows a flow chart comprising the steps of the method of arranging a set of data resource descriptors in a cache memory and the optional step of rearranging the descriptors.
Figure 6 shows a high level data flow block diagram illustrating the relevant component blocks and their interactions.

### DETAILED DESCRIPTION OF THE INVENTION

A packing scheme is proposed for packing different types and sizes of resource descriptors to support dynamic indexing in a cache memory efficient way. This may include an improved data flow of packing information between the software and the hardware of a device. The packing scheme may be referred to as a combined resource packing scheme due to the resources for particular graphics purposes being combined together into sets of descriptors. An example of such a purpose may be to apply a specific shader to a scene. A shader may be thought of as a single entity, but may comprise a plurality of different textures and lighting effects, etc. to be applied at different locations within the 3D scene. Applying the effects creates the overall appearance provided by the particular shader in a final image. An example of such a shader comprising multiple resources would be any of the various shaders users make for use in the game Minecraft^{®}. These shaders each implement a different set of aesthetics on rendered views of the same Minecraft^{®} world.

An example resource descriptor packing scheme for use with the Vulkan API may comprise the following rules:
Each descriptor set for a single resource has a base address.

The base address is aligned to a hardware cache line size.

The memory address of a descriptor in the set is aligned to the descriptor size.

The descriptor size is equal to the cache line size divided by P, where P is an integer.

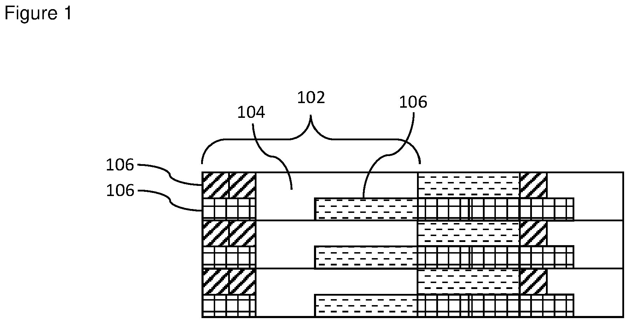

Figure 1 illustrates an example of resource descriptor packing in a cache memory. The smallest cells of the cache denote 64 bits, each cell denotes a single resource descriptor, and each pattern denotes one type of descriptor. Two descriptors of different types may still have the same size. The memory size of the cache line 102 in this example is 1 kilobyte, or 1024 bytes. All of the descriptors in a single line of the cache in figure 1 therefore may add up to a total size of no more than 1024 bytes. In figure 1 the example cache line is 128 bytes in depth and 512 bytes long, which in the figure holds two rows of descriptors 106. It is possible to see in this example cache memory that the descriptors do not fit into the cache lines in an efficient way. Each cache line 102 has a large white space 104 in which no remaining descriptors 106 of that set will fit. In other packing schemes a cache line may comprise descriptors with a different maximum total size.

There is proposed a packing scheme for resource descriptors in a cache memory for use with a graphics API, e.g. Vulkan^{®} API. The proposed packing scheme comprises the following aspects. The addresses of the descriptors in the cache memory are stored together. The addresses point to the hardware internal descriptors. The descriptors point to the respective resource like texture, sampler, uniform, etc. The hardware uses a dynamic index to get the address for the correct descriptors in the cache, then fetches the descriptors from the cache memory, and finally obtains the complete resource. Each address in the cache points to one descriptor. Each address can be as little as 4 bytes. As a result, a small cache memory can pre-fetch more addresses of descriptors compared to the actual descriptors, which is usually at least 32 bytes.

Some example syntax for denoting these elements of the packing scheme may be, for example:
Address0, address1, address2... [provide the respective descriptors]
   T#0 S#0 U#0 .... [which in turn provide the respective resource]
Texture0, Sampler0, Uniform0 [the resources may be combined for a single purpose]

The proposed packing scheme, a combined resource packing scheme, obeys these basic rules:
For the combined resource with multiple descriptors, the cache line size may be a multiple of the size of the maximum combined resource descriptors, or the size of maximum combined resource descriptors is a multiple of the cache line size. That is to say, the largest resource within the combined resources in terms of cache memory required to store it, defines either the size of each cache memory line or a multiple of cache memory lines needed to store it. This then defines a one or more addressable cache lines in which to store the resource descriptors efficiently. Therefore the combined resource descriptor is aligned to its maximum combined descriptor size.

The extension implementing the combined resource buffer should provide the API for the application to query maximum limit of the combined resource size supported by the implementation.

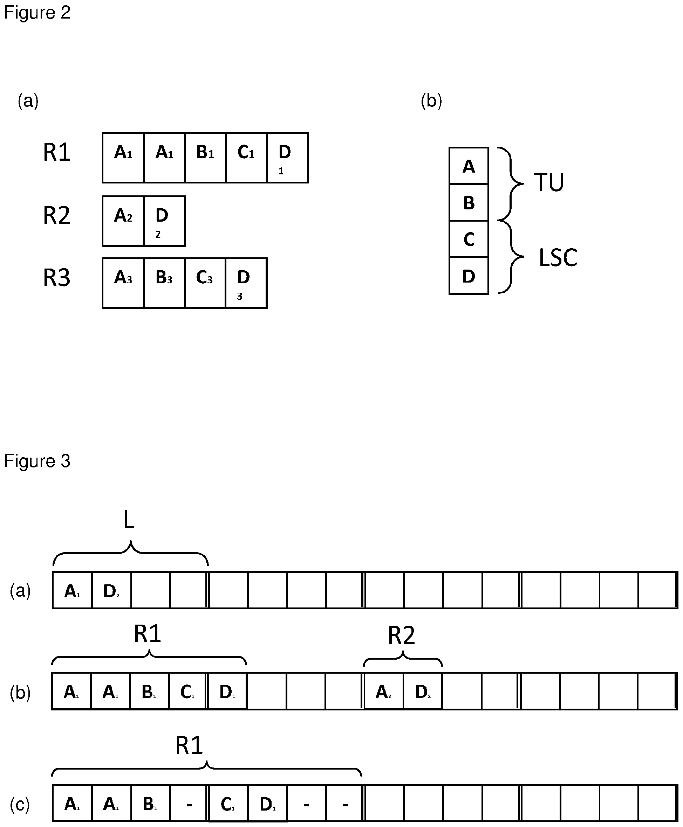

Figure 2(a) shows three example combined resources R1, R2, and R3. R1 comprises five resource descriptors, R2 comprises two resource descriptors, and R3 comprises four resource descriptors. The descriptors each identify the resource they belong to with a subscript. Letters A, B, C, and D denote the type of descriptor (e.g. texture, sampler, etc.).

Figure 2(b) shows each of the types of descriptor from which combined resources R1, R2, and R3 can be described. Type A and B are shown as being retrieved by one unit, here for example, descriptors of type A and B are retrieved by the texture unit (TU). Type C and D are shown as being retrieved by a different unit to that of type A and B. Here for example, descriptors of type C and D belong to the same category and are retrieved by a load store cache (LSC). It is desirable to store descriptors for resources used by the same unit of the GPU in similar locations of the cache memory. This makes retrieval of the descriptors needed by a particular unit more straightforward for that unit. For example, the unit may then assume that once it reaches a descriptor for a resource which is to be handled by another unit, it does not need to keep reading the descriptors of that particular combined resource anymore to be sure it has all the descriptors it will need.

Figure 3 illustrates three different cache lines implementing three different packing schemes. For simplicity in these examples all of the individual resource descriptors are the same size, and the cache lines comprise a small number of cells. Each cache has four cache lines of size L. Each cache line L has four equal cells of a minimum size.

Figure 3(a) shows a cache with a first line comprising an A descriptor from combined resource R1, and a D descriptor from combined resource R2. This is an undesirable packing scheme. The descriptors of different combined resources are mixed together within the same cache line and the line would have to be accessed by both the TU and the LSC to obtain their respective descriptors. Figure 3(a) illustrates an undesirable packing scheme or no packing scheme.

Figure 3(b) shows a cache comprising four cache lines. The combined resource R1 is larger than a single cache line, so the maximum combined resource size requires use of a multiple number of the cache lines in order to be stored. The maximum combined resource R1 is therefore formed into two groups and stored in the first two cache lines. An amount of padding may then be used to fill the rest of the second cache line so that only descriptors of R1 are stored in the second cache line. This may be achieved by forming the second group as a group of four descriptors comprising D1 and three units of padding. Combined resource R2 can then be stored in the next empty cache line, as shown in the third cache line of figure 3(b).

The remaining cache line can be used to store another combined resource descriptor. For example, R3 may be stored in the fourth cache line, which is the next empty cache line after R2 (not shown). The only constraint that applies here is that the start address of the next combined resource descriptor needs to follow the alignment requirement for that combined resource descriptor. If the alignment condition can be satisfied alongside the multiple cache line size requirement of R1, then the next combined resource descriptor can be fitted in to a remaining cache line.

An example implementation of this packing scheme may be, for each resource in combined resources: 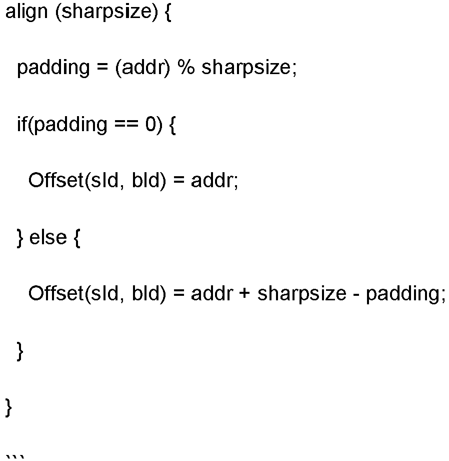 where 'sharpsize' denotes the size of a combined resource descriptor set, 'padding' is the space left between the end of the resource descriptor set and the start of a next cache line or next resource descriptor set, and 'addr' is the address of the cache line used.

In one embodiment of implementing the proposed packing scheme it may be desired to reorder the descriptors of a combined resource to make the descriptors of the same category close together (i.e. the resources retrieved by the same GPU hardware unit). In this way the descriptors of the same category can be stored inside the same cache line(s).

Figure 3(c) shows a cache where the maximum combined resource R1 is stored. The combined resource R1 is larger than a single cache line as in fig. 3 (a). However, in fig. 3(c) the resource descriptors of R1 have been separated by category and distributed accordingly over the two groups for the two cache lines used for storing R1. In the example of fig. 3(c) a simplified version of this embodiment is used for the purposes of explaining the concept. The series of groups formed as a result of this reordering are formed such that all of the resource descriptors within each group are of the same category.

It should be appreciated that in practice the resource descriptors of a particular type may not initially be arranged adjacent to all the descriptors of the same type. In such a case the resource descriptors may need rearranging before they can be divided and stored in separate cache lines depending on their type.

It is important to note that the descriptors for any one resource are addressed by reference to the cache line in which they are stored. Therefore, it is noted that descriptors in different resources are not rearranged to be mixed together even if they contain resource descriptors of the same type and are stored in adjacent cache lines.

As a result of using the above explained packing scheme for storing resource descriptors in a cache memory, the descriptors of similar types only need to be separated from the descriptors of the same resource of a different type by an amount equal to the remainder of the cache line used for the previous of the two descriptor types. That is, type α descriptors of resource A may take up 2.5 cache lines. Thus, a space of the remainder of the third cache line can be left blank to separate the type α descriptors from any type β descriptors in the rest of the descriptors of resource A.

By separating the descriptors for a resource into different cache lines according to type it is possible to facilitate more efficient reading of the resource descriptors by the modules of the GPU. This is because different modules are responsible for using different resource descriptor types within the combined resource. If the descriptors of the same type are separated into different cache lines, the modules which require a specific type of resource descriptors can ignore cache lines which do not store any descriptors of that type. That is, in keeping with the above analogy, if module C only requires type β descriptors then it can ignore the cache lines which store the type α descriptors and skip straight to the cache lines which store the type β descriptors of the resource A. In this embodiment, the index entry of the resource A may indicate which cache line(s) have which type of descriptors in them.

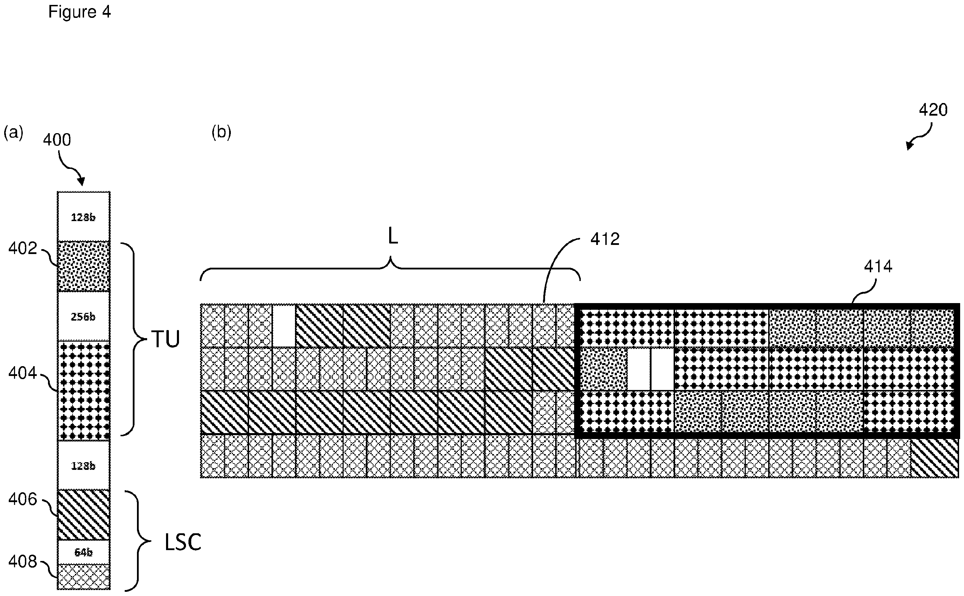

Figure 4(a) and (b) show an example of how descriptors may be shuffled or rearranged within the cache.

Figure 4(a) shows a legend 402 with four different descriptor types. Different descriptor types may be fetched by the same GPU module, or by a different GPU module, depending on the type of descriptor and the purpose of the module in question. For example, in fig. 4(a) the top two descriptor types 404, 406, belong to one category which is fetched by the TU module. The bottom two descriptor types 408, 410, belong to another category which is fetched by the LSC module. Each module has the cache to store the descriptors. In the legend the sizes of the four different descriptors are indicated above the respective descriptors. The legend 402 identifies the different descriptors by type 404, 406, 408, 410 and category TU, LSC such that they can be easily identified in the cache memory 420 illustrated in figure 4(b).

Figure 4(b) shows a cache memory 420 which is linewise accessible and comprises eight 1 kilobit cache lines L. The top left cache line 412 contains both types of descriptors 408, 410 fetched by the LSC module. This cache line 412 can be fetched by the LSC module in its entirety. That is, without the need to avoid or unnecessarily fetch any descriptors which do not belong to a category handled by the LSC module.

Descriptors located inside a single cache line which are of different types but belong to the same category can also be separated from each other by arranging them either side of any unused bits in that cache line. In this way the unused bits in the cache line, or the padding, can be used for a further purpose other than just causing the next category of descriptors of that resource or the descriptors of another resource to be stored in the next cache line. For example, a combined Image and Sampler resource type could be made up of texture and sample type hardware descriptors. All Image/Texture/Sampler related resources would be fetched by the TU unit while Buffer/Storage related etc. would be fetched by the LSC unit. In the case where a Buffer is treated as an Image or an Image is treated as a Buffer an explicit API call may be done by the application.

Figure 4(b) also shows how the descriptors of a specific category may be arranged within the cache memory such that they are located within similarly located lines of the cache memory. That is, the lines of the cache memory containing descriptors of the same category may be located within the cache memory in adjacent or near adjacent locations. This may be dependent on the size of the combined resource, the number of cache lines over which it is stored, and the same properties of the previous and next resource descriptor set. For example, the three cache lines in the top right corner of the cache memory as illustrated in fig. 4(b) all contain descriptors fetched by the TU module and are outlined by a thick boarder 414. These cache lines have been located one above the otherto optimise the fetching of these cache lines by the TU module. These cache lines may store descriptors for different resources. However, by being located adjacent to each other the TU module will be able to more efficiently fetch these cache lines should the different resources contained therein be fetched at similar times.

An example implementation of the proposed packing scheme including a reordering of the descriptors based on category prior to storing in respective cache lines may be:

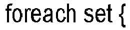

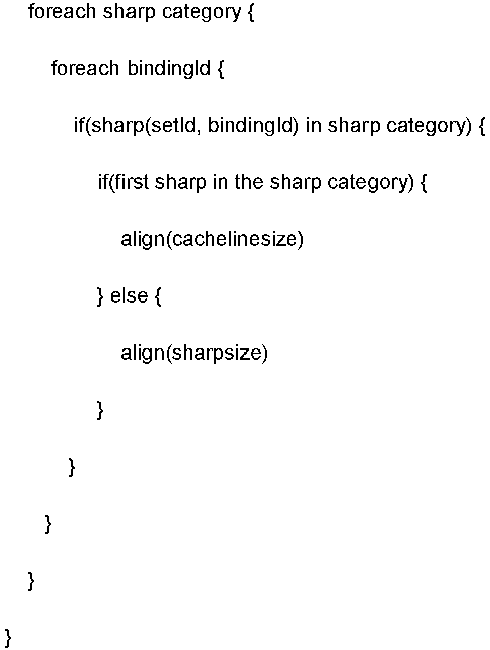

In the above implementation 'set' is a set of resources, 'sharp' is the hardware descriptor for each resource, 'bindingid' is the resources that are used (excluding all other resources that are marked unused by the shader). Other resources could still be present but could be marked unused for a given instance of shader execution, 'setid' is the loop index for each set, 'cachelinesize' is the size of the cache line in bytes, and 'sharpsize' is the size of the hardware resource descriptor or data structure in bytes.

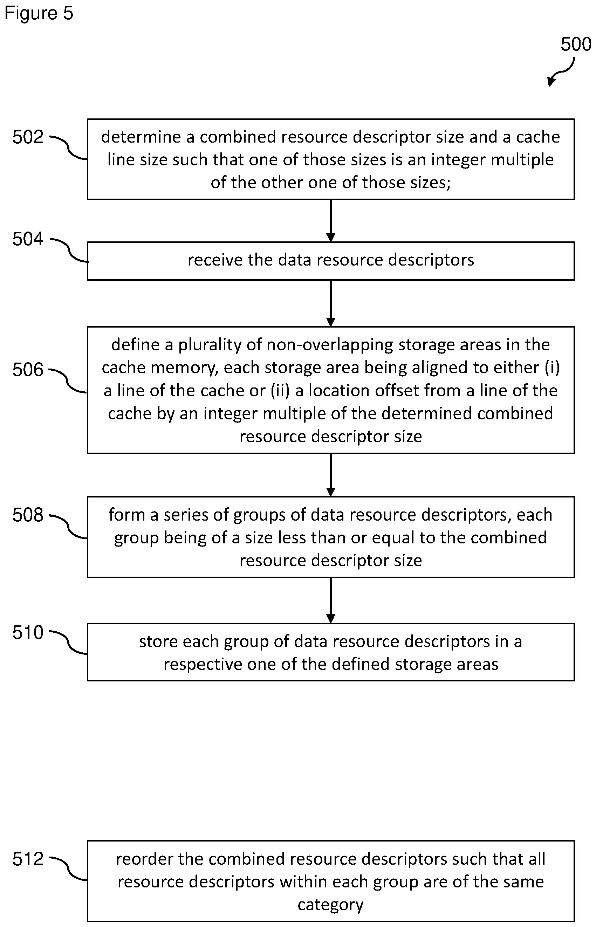

Figure 5 shows a flow chart comprising the steps of the method 500 of arranging data and a set of data resource descriptors in a cache memory.

In step 502, the method determines a combined resource descriptor size and a cache line size such that one of those sizes is an integer multiple of the other one of those sizes. That is, the combined resource descriptor size may be of a magnitude such that it fits into a plurality of cache lines, all of which are needed to store the single combined resource descriptor. The cache line size may otherwise be a multiple of the combined resource descriptor size and multiple sets of data resource descriptors may fit into one cache line. This determination step enables the correct indexing of the addresses in the cache memory of the various resource descriptor sets.

Moving on to step 504, the data resource descriptors are received. The data resource descriptor is the actual data which will be stored in the cache memory according to the proposed packing scheme.

Following step 504, in step 506 a plurality of non-overlapping storage areas are defined in the cache memory, each storage area being aligned to either (i) a line of the cache or (ii) a location offset from a line of the cache by an integer multiple of the determined combined resource descriptor size. That is, the plurality of non-overlapping storage areas may be arranged in the cache memory by aligning any one storage area to the start of a line of the cache, or by aligning any one storage area to a position within a line of the cache which is a certain distance away from the start of the line. The position away from the start of the line may be define by the amount of memory space between the start of the line and said position. The position may be chosen in dependence on the size in terms of memory of the largest combined resource descriptor. That is, the set of descriptors for a resource which is the biggest in term of memory space it takes up in the cache.

In step 508, a series of groups of data resource descriptors are formed, each group being of a size less than or equal to the combined resource descriptor size. That is, the combined resource descriptor may be divided into groups for storing in separate cache lines as for R1 in figures 3(b) and 3 (c), or the combined resource descriptor may be a whole group which fits into a cache line as for R2 in figure 3(b).

Finally, in step 510, each group of data resource descriptors may be stored in a respective one of the defined storage areas. That is, the groups as defined above may each be located in a different, separate part of the cache memory identified depending on the structure of the defined storage areas. As a result, the location of each of the groups can be identified individually without the need to identify other groups of descriptors in the same set.

If the resource descriptors are rearranged prior to being grouped such that the descriptors of the same category are located in the same group(s), then an additional step 512 may be carried out prior to the grouping step 508.

In step 512, the descriptors in the combined resource descriptor set are rearranged or shuffled such that descriptors of the same category (i.e. descriptors which are fetched by the same GPU hardware modules), are located in the same group as each other. Or rather, the defined groups contain descriptors which all belong to the same category. In this way the GPU modules which fetch a specific category of descriptors can efficiently find the descriptors they need from the cache memory, and do not need to fetch descriptors of different categories which they can't use and must then ignore.

By utilising the above described packing scheme, it is possible to implement a dynamic indexing of resource descriptors which allows existing GPU hardware to take advantage of APIs which allow for the combining of resource descriptors in graphics rendering.

The above proposed packing scheme has advantages in that it allows the GPU to index the massive heterogeneous descriptor array which results from combining the resource descriptors. It also reduces the driver overhead by using a straightforward and simple to implement alignment rule. Additionally, the proposed resource packing scheme is good for the GPU hardware as it may support an internal dedicated cache for caching and keeping the hardware descriptors for future use.

After shuffling, the hardware TU fetch the cache line 1 Kbit, which contains T# and S# only. The hardware LSC fetch the cache line 1 Kbit, which contains U# and C# only.

The proposed packing scheme additionally allows for a specific data flow which includes these key elements. The data flow goes from a driver to the compiler to the GPU hardware. Figure 6 is a high level data flow block diagram which shows the relevant GPU hardware component blocks and their interactions with software at the CPU via 'Job Descriptors' data structures of the shared memory. Arrows illustrate the direction of the data flow between the various software and hardware system components as described herein.

At the driver the value index_offset is computed. This requires the value offset(setld, bindingld)/stride to be calculated, and is followed by filling the index_offset in the internal uniform of the descriptor.

Just like for the structure size, the compile time size is also known to the compiler (e.g. how the structures are packed or not fully packed). The same principle applies here. This depends on the definition of these resource types as written inside the shader code (not in the driver runtime code implementing these APIs). The index offset size has to be calculated by the shader compiler during runtime on the CPU (host) before execution of the shader, then passed on to the driver using the compiler driver interface. This information is then set inside hardware descriptors by the driver, coming from the compiler, to be used by the hardware for shader execution.

At the compiler instructions for indexing the set of resource descriptors relating to a function are added to such that an offset value is added. The offset value corresponds to an offset location in a respective storage area of the set of resource descriptors. The instructions are stored in the same storage area as the resource descriptors for that function. That is, to support the dynamic indexing feature for combined resources, the compiler needs to insert an instruction to add the index with the offset location of the combined resource into the shader code to calculate the final index. Thus, the instructions are added so as to compute total_index = (index_offset + index). total_index is then stored in the general purpose register (GPR) of the GPU. For example, there may be an array combined resource descriptor, crd[3], and when executing the shader code it tries to index the ith combined resource by using syntax crd[i], where i is a value in the set [0, 2]. The compiler will insert an add instruction to calculate the final index as i + offset index, the offset index being based on the size calculated at the driver.

The GPU hardware is then able to execute the shader codes and compute the final address = base address + (total_index<<stride) for the resource descriptor.

Descriptors may also be referred to as sharps, which are the meta data stored in the memory for the shader resource. For example, a T sharp may include the address, texture dimension and so on for the texture. An S sharp may include the address, filtering mode and so on for the sampler. The descriptor or sharp size can be different. Vulkan defines different descriptor types for the shader resource. Each descriptor type maps to one sharp. Combined resource in this context means that mixed sharps can be in one array, which supports dynamic uniform and non-uniform indexing.

## Claims

1. A data processor configured to arrange data and a set of data resource descriptors (106) in a cache memory (420), wherein the set of data resource descriptors comprises data resource descriptors of different types and different sizes, wherein the cache memory is linewise accessible by a data processing device, the data processor being configured to:
determine a combined resource descriptor size and a cache line (102) size such that one of those sizes is an integer multiple of the other one of those sizes;
receive the data resource descriptors;
define a plurality of non-overlapping storage areas in the cache memory, each storage area being aligned to either (i) a line of the cache or (ii) a location offset from a line of the cache by an integer multiple of the determined combined resource descriptor size;
form a series of groups of data resource descriptors, each group being of a size less than or equal to the combined resource descriptor size; and
store each group of data resource descriptors in a respective one of the plurality of the defined non-overlapping storage areas.

2. The data processor according to claim 1, wherein each data resource descriptor has a category based on which of a plurality of hardware units is used to fetch the data resource descriptor from the cache memory, and the data processor is configured to, prior to the step of forming a series of groups, reorder the combined resource descriptors such that all data resource descriptors within each group are of the same category.

3. The data processor according to any preceding claim, wherein the combined resource descriptor size is the maximum combined size of the data resource descriptors needed to describe a single action.

4. The data processor according to any preceding claim, wherein the combined resource descriptor size is an integer multiple of the cache line size.

5. The data processor according to any preceding claim, wherein the cache line size is an integer multiple of the combined resource descriptor size.

6. The data processor according to any preceding claim, wherein the data resource descriptors describe any combination of heterogeneous resource types comprising any of a texture, a sampler, a buffer, or an image.

7. The data processor according to any preceding claim, wherein the data processor is a graphics processor unit.

8. A method (500) of arranging data and a set of data resource descriptors in a cache memory, wherein the set of data resource descriptors comprises data resource descriptors of different types and different sizes, wherein the cache memory is linewise accessible by a data processing device, the method comprising:
determining (502) a combined resource descriptor size and a cache line size such that one of those sizes is an integer multiple of the other of those sizes;
receiving (504) the data resource descriptors;
defining (506) a plurality of non-overlapping storage areas in the cache memory, each storage area being aligned to either (i) a line of the cache or (ii) a location offset from a line of the cache by an integer multiple of the determined combined resource descriptor size;
forming (508) a series of groups of data resource descriptors, each group being of a size less than or equal to the combined resource descriptor size; and
storing (510) each group of data resource descriptors in a respective one of the plurality of the defined non-overlapping storage areas.

9. The method (500) of claim 8, wherein the method (500) comprises, prior to the step of forming (508) a series of groups, reordering (512) the data resource descriptors such that the data resource descriptors within each group are of the same category.

10. The method (500) of claim 8 or 9, wherein the combined resource descriptor size is an integer multiple of the cache line size.

11. The method (500) of any of claims 8 to 10, wherein the cache line size is an integer multiple of the combined resource descriptor size.

12. The method (500) of any of claims 8 to 11, wherein a data flow of the method is from a driver to a compiler to a graphics processor unit.

13. The method (500) of claim 12, wherein the driver is configured to compute the size of each of the said storage areas and for each of a set of functions, each function being associated with a set of one or more of said groups of data resource descriptors, store the data resource descriptors of each group of that set in a single storage area.

14. The method (500) of claim 13, wherein the compiler is configured to add to instructions for indexing the set of data resource descriptors relating to a function such that an offset value is added which corresponds to an offset location in a respective storage area of the set of data resource descriptors and to store those instructions in the same storage area as the data resource descriptors for that function.

15. A device comprising the data processor of any of claims 1 to 7 executing the method of any of claims 8 to 11, and a CPU executing the method of any of claims 12 to 14.

## Patentansprüche

1. Datenprozessor, konfiguriert zum Anordnen von Daten und einer Menge von Datenbetriebsmittel-Deskriptoren (106) in einem Zwischenspeicher (420),
wobei die Menge von Datenbetriebsmittel-Deskriptoren Datenbetriebsmittel-Deskriptoren verschiedener Typen und verschiedener Größen umfasst, wobei der Zwischenspeicher zeilenweise durch ein Datenverarbeitungsgerät zugänglich ist, wobei der Datenprozessor konfiguriert ist zum:
Bestimmen einer kombinierten Betriebsmitteldeskriptor-Größe und einer Zwischenspeicherzeile-Größe (102) derart, dass eine dieser Größen ein ganzzahliges Vielfaches der anderen einen dieser Größen ist;
Empfangen der Datenbetriebsmittel-Deskriptoren;
Definieren einer Vielzahl von nicht überlappenden Speicherbereichen in dem Zwischenspeicher, wobei jeder Speicherbereich mit entweder (i) einer Zeile des Zwischenspeichers oder (ii) einem Ort, der von einer Zeile des Zwischenspeichers um ein ganzzahliges Vielfaches der bestimmten kombinierten Betriebsmitteldeskriptor-Größe versetzt ist, ausgerichtet ist;
Bilden einer Reihe von Gruppen von Datenbetriebsmittel-Deskriptoren, wobei jede Gruppe eine Größe aufweist, die kleiner als die oder gleich der kombinierten Betriebsmitteldeskriptor-Größe ist; und
Speichern jeder Gruppe von Datenbetriebsmittel-Deskriptoren in einem jeweiligen einen der Vielzahl der definierten nicht überlappenden Speicherbereiche.

2. Datenprozessor nach Anspruch 1, wobei jeder Datenbetriebsmittel-Deskriptor eine Kategorie aufweist, basierend auf der eine Vielzahl von Hardware-Einheiten verwendet wird, den Datenbetriebsmittel-Deskriptor aus dem Zwischenspeicher zu holen, und der Datenprozessor konfiguriert ist zum, vor dem Schritt des Bildens einer Reihe von Gruppen, Umordnen der kombinierten Betriebsmitteldeskriptoren derart, dass alle Datenbetriebsmittel-Deskriptoren in jeder Gruppe die gleiche Kategorie aufweisen.

3. Datenprozessor nach einem der vorhergehenden Ansprüche, wobei die kombinierte Betriebsmitteldeskriptor-Größe die maximale kombinierte Größe der Datenbetriebsmittel-Deskriptoren ist, die erforderlich ist, eine einzelne Aktion zu beschreiben.

4. Datenprozessor nach einem der vorhergehenden Ansprüche, wobei die kombinierte Betriebsmitteldeskriptor-Größe ein ganzzahliges Vielfaches der Zwischenspeicherzeilen-Größe ist.

5. Datenprozessor nach einem der vorhergehenden Ansprüche, wobei die Zwischenspeicherzeilen-Größe ein ganzzahliges Vielfaches der kombinierten Betriebsmitteldeskriptor-Größe ist.

6. Datenprozessor nach einem der vorhergehenden Ansprüche, wobei die Datenbetriebsmittel-Deskriptoren eine beliebige Kombination von heterogenen Betriebsmitteltypen, die ein beliebiges einer Textur, eines Abtasters, eines Puffers oder eines Bilds umfassen, beschreiben.

7. Datenprozessor nach einem der vorhergehenden Ansprüche, wobei der Datenprozessor eine Grafikprozessoreinheit ist.

8. Verfahren (500) zum Anordnen von Daten und einer Menge von Datenbetriebsmittel-Deskriptoren in einem Zwischenspeicher, wobei die Menge von Datenbetriebsmittel-Deskriptoren Datenbetriebsmittel-Deskriptoren verschiedener Typen und verschiedener Größen umfasst, wobei der Zwischenspeicher zeilenweise durch ein Datenverarbeitungsgerät zugänglich ist, das Verfahren umfassend:
Bestimmen (602) einer kombinierten Betriebsmitteldeskriptor-Größe und einer Zwischenspeicherzeilen-Größe derart, dass eine dieser Größen ein ganzzahliges Vielfaches der anderen dieser Größen ist;
Empfangen (504) der Datenbetriebsmittel-Deskriptoren;
Definieren (506) einer Vielzahl von nicht überlappenden Speicherbereichen in dem Zwischenspeicher, wobei jeder Speicherbereich mit entweder (i) einer Zeile des Zwischenspeichers oder (ii) einem Ort, der von einer Zeile des Zwischenspeichers um ein ganzzahliges Vielfaches der bestimmten kombinierten Betriebsmitteldeskriptor-Größe versetzt ist, ausgerichtet ist;
Bilden (508) einer Reihe von Gruppen von Datenbetriebsmittel-Deskriptoren, wobei jede Gruppe eine Größe aufweist, die kleiner als die oder gleich der kombinierten Betriebsmitteldeskriptor-Größe ist; und
Speichern (510) jeder Gruppe von Datenbetriebsmittel-Deskriptoren in einem jeweiligen einen der Vielzahl der definierten nicht überlappenden Speicherbereiche.

9. Verfahren (500) nach Anspruch 8, wobei das Verfahren (500) umfasst, vor dem Schritt des Bildens (508) einer Reihe von Gruppen die Datenbetriebsmittel-Deskriptoren derart umzuordnen (512), dass die Datenbetriebsmittel-Deskriptoren in jeder Gruppe die gleiche Kategorie aufweisen.

10. Verfahren (500) nach Anspruch 8 oder 9, wobei die kombinierte Betriebsmitteldeskriptor-Größe ein ganzzahliges Vielfaches der Zwischenspeicherzeilen-Größe ist.

11. Verfahren (500) nach einem der Ansprüche 8 bis 10, wobei die Zwischenspeicherzeilen-Größe ein ganzzahliges Vielfaches der kombinierten Betriebsmitteldeskriptor-Größe ist.

12. Verfahren (500) nach einem der Ansprüche 8 bis 11, wobei ein Datenfluss des Verfahrens von einem Treiber zu einem Compiler zu einer Grafikprozessoreinheit ist.

13. Verfahren (500) nach Anspruch 12, wobei der Treiber konfiguriert ist zum Berechnen der Größe jeder der Speicherbereiche und für jede einer Menge von Funktionen, wobei jede Funktion mit einem Satz einer oder mehrerer der Gruppen von Datenbetriebsmittel-Deskriptoren assoziiert ist, Speichern der Datenbetriebsmittel-Deskriptoren jeder Gruppe dieser Menge in einem einzelnen Speicherbereich.

14. Verfahren (500) nach Anspruch 13, wobei der Compiler konfiguriert ist zum Hinzufügen der Anweisungen zum Indexieren der Menge von Datenbetriebsmittel-Deskriptoren bezüglich einer Funktion derart, dass ein Versatzwert, der mit einem Versatzort in einem jeweiligen Speicherbereich der Menge von Datenbetriebsmittel-Deskriptoren korrespondiert, hinzugefügt wird, und zum Speichern dieser Anweisungen in demselben Speicherbereich wie die Datenbetriebsmittel-Deskriptoren für diese Funktion.

15. Gerät, umfassend den Datenprozessor nach einem der Ansprüche 1 bis 7, der das Verfahren nach einem der Ansprüche 8 bis 11 ausführt, und eine CPU, die das Verfahren nach einem der Ansprüche 12 bis 14 ausführt.

## Revendications

1. Processeur de données configuré pour agencer des données et un ensemble de descripteurs de ressource de données (106) dans une mémoire cache (420),
dans lequel l'ensemble de descripteurs de ressource de données comprend des descripteurs de ressource de données de différents types et de différentes tailles, dans lequel la mémoire cache est accessible ligne par ligne par un dispositif de traitement de données, le processeur de données étant configuré pour :
déterminer une taille de descripteur de ressource combinée et une taille de ligne de cache (102) de telle sorte que l'une de ces tailles soit un multiple entier de l'autre de ces tailles ;
recevoir les descripteurs de ressource de données ;
définir une pluralité de zones de stockage sans chevauchement dans la mémoire cache, chaque zone de stockage étant alignée soit sur (i) une ligne du cache, soit sur (ii) un emplacement décalé par rapport à une ligne du cache d'un multiple entier de la taille de descripteur de ressource combinée déterminée ;
former une série de groupes de descripteurs de ressource de données, chaque groupe ayant une taille inférieure ou égale à la taille de descripteur de ressource combinée ; et
stocker chaque groupe de descripteurs de ressource de données dans une zone de stockage respective de la pluralité de zones de stockage sans chevauchement définies.

2. Processeur de données selon la revendication 1, dans lequel chaque descripteur de ressource de données a une catégorie qui dépend de quelle unité matérielle d'une pluralité d'unités matérielles est utilisée pour récupérer le descripteur de ressource de données dans la mémoire cache, et le processeur de données est configuré pour, avant l'étape de formation d'une série de groupes, réordonner les descripteurs de ressource combinés de telle sorte que tous les descripteurs de ressource de données dans chaque groupe soient de la même catégorie.

3. Processeur de données selon l'une quelconque des revendications précédentes, dans lequel la taille de descripteur de ressource combinée est la taille combinée maximale des descripteurs de ressource de données nécessaires pour décrire une action individuelle.

4. Processeur de données selon l'une quelconque des revendications précédentes, dans lequel la taille de descripteur de ressource combinée est un multiple entier de la taille de ligne de cache.

5. Processeur de données selon l'une quelconque des revendications précédentes, dans lequel la taille de ligne de cache est un multiple entier de la taille de descripteur de ressource combinée.

6. Processeur de données selon l'une quelconque des revendications précédentes, dans lequel les descripteurs de ressource de données décrivent toute combinaison de types de ressource hétérogènes comprenant tout élément parmi une texture, un échantillonneur, un tampon ou une image.

7. Processeur de données selon l'une quelconque des revendications précédentes, le processeur de données étant une unité de traitement graphique.

8. Procédé (500) pour agencer des données et un ensemble de descripteurs de ressource de données dans une mémoire cache, dans lequel l'ensemble de descripteurs de ressource de données comprend des descripteurs de ressource de données de différents types et de différentes tailles, dans lequel la mémoire cache est accessible ligne par ligne par un dispositif de traitement de données, le procédé comprenant les étapes consistant à :
déterminer (502) une taille de descripteur de ressource combinée et une taille de ligne de cache de telle sorte que l'une de ces tailles soit un multiple entier de l'autre de ces tailles ;
recevoir (504) les descripteurs de ressource de données ;
définir (506) une pluralité de zones de stockage sans chevauchement dans la mémoire cache, chaque zone de stockage étant alignée soit sur (i) une ligne du cache, soit sur (ii) un emplacement décalé par rapport à une ligne du cache d'un multiple entier de la taille de descripteur de ressource combinée déterminée ;
former (508) une série de groupes de descripteurs de ressource de données, chaque groupe ayant une taille inférieure ou égale à la taille de descripteur de ressource combinée ; et
stocker (510) chaque groupe de descripteurs de ressource de données dans une zone de stockage respective de la pluralité de zones de stockage sans chevauchement définies.

9. Procédé (500) selon la revendication 8, le procédé (500) comprenant, avant l'étape de formation (508) d'une série de groupes, l'étape consistant à réordonner (512) les descripteurs de ressource de données de telle sorte que les descripteurs de ressource de données dans chaque groupe soient de la même catégorie.

10. Procédé (500) selon la revendication 8 ou 9, dans lequel la taille de descripteur de ressource combinée est un multiple entier de la taille de ligne de cache.

11. Procédé (500) selon l'une quelconque des revendications 8 à 10, dans lequel la taille de ligne de cache est un multiple entier de la taille de descripteur de ressource combinée.

12. Procédé (500) selon l'une quelconque des revendications 8 à 11, dans lequel un flux de données du procédé va d'un pilote à un compilateur, puis à une unité de traitement graphique.

13. Procédé (500) selon la revendication 12, dans lequel le pilote est configuré pour calculer la taille de chacune desdites zones de stockage, et pour chaque fonction d'un ensemble de fonctions, chaque fonction étant associée à un ensemble d'un ou plusieurs desdits groupes des descripteurs de ressource de données, stocker les descripteurs de ressource de données de chaque groupe de cet ensemble dans une zone de stockage individuelle.

14. Procédé (500) selon la revendication 13, dans lequel le compilateur est configuré pour ajouter à des instructions d'indexation l'ensemble de descripteurs de ressource de données liés à une fonction de telle sorte qu'une valeur de décalage soit ajoutée qui corresponde à un emplacement de décalage dans une zone de stockage respective de l'ensemble de descripteurs de ressource de données et pour stocker ces instructions dans la même zone de stockage que les descripteurs de ressource de données concernant cette fonction.

15. Dispositif comprenant le processeur de données selon l'une quelconque des revendications 1 à 7 exécutant le procédé selon l'une quelconque des revendications 8 à 11, et une CPU exécutant le procédé selon l'une quelconque des revendications 12 à 14.
